# EUROPÄISCHE PATENTSCHRIFT

(11) **EP 3 589 796 B1**
(45) Veröffentlichungstag und Bekanntmachung des Hinweises auf die Patenterteilung: **04.08.2021**
(21) Anmeldenummer: 17711191.1
(22) Anmeldetag: 17.03.2017
(51) Int. Cl.: E04F 13/08, E04B 1/76, F16B 1/00

(54) **VORRICHTUNG UND VERFAHREN ZUR HERSTELLUNG EINER WAND- ODER DECKENVERKLEIDUNG**
DEVICE AND METHOD FOR PRODUCING A WALL OR CEILING CLADDING
DISPOSITIF ET PROCÉDÉ POUR PRODUIRE UN HABILLAGE DE MUR OU DE PLAFOND

(43) Veröffentlichungstag der Anmeldung: 08.01.2020
(73) Patentinhaber: STO SE & Co. KGaA, 79780 Stühlingen (DE)
(72) Erfinder: BOSSE, Tobias, 78269 Volkertshausen (DE)
(74) Vertreter: Gottschalk, Matthias
(86) Internationale Anmeldenummer: PCT/EP2017/056371
(87) Internationale Veröffentlichungsnummer: WO 2018/166617

(56) Entgegenhaltungen:
- EP-A2- 2 436 851
- DE-A1- 3 927 653
- DE-A1- 4 323 989
- DE-U1- 8 808 787

## Beschreibung

Die Erfindung betrifft eine Vorrichtung zur Ausbildung einer Wand- oder Deckenverkleidung mit den Merkmalen des Oberbegriffs des Anspruchs 1. Die Vorrichtung soll sowohl im Innen- als auch im Außenbereich einsetzbar sein. Im Innenbereich kann sie beispielsweise bei der Herstellung einer Wandvorsatzschale oder einer abgehängten Decke verwendet werden. Im Außenbereich lassen sich mittels der Vorrichtung insbesondere vorgehängte hinterlüftete Fassaden realisieren.

Darüber hinaus wird ein Verfahren zur Herstellung einer solchen Wand- oder Deckenverkleidung vorgeschlagen, bei dem insbesondere eine erfindungsgemäße Vorrichtung zum Einsatz gelangen kann.

### Stand der Technik

Die Herstellung einer Wand- oder Deckenverkleidung kann sehr zeit- und kostenintensiv sein. Häufig gilt es die Wand- oder Deckenverkleidung unter Einhaltung eines gewissen Abstands an einem bauseitigen Untergrund zu befestigen, so dass zwischen der eigentlichen Verkleidung und dem bauseitigen Untergrund eine Unterkonstruktion angeordnet werden muss. Der Abstand kann insbesondere der Ausbildung einer Luftschicht dienen, die eine Hinterlüftung gewährleistet und/oder Leitungen aufnimmt. Im Außenbereich muss zudem regelmäßig eine Wärmedämmschicht zwischen der Verkleidungsplatte und dem bauseitigen Untergrund angeordnet werden, um die erforderliche Wärmedämmung sicherzustellen.

In der Regel ist zudem eine nicht sichtbare Befestigung der Wand- oder Deckenverkleidung am bauseitigen Untergrund erwünscht. Bilden die zu befestigenden Verkleidungsplatten nicht die endgültige Oberfläche aus, können sie auch mittels Schrauben oder Nägel an der Unterkonstruktion befestigt werden. Die Köpfe der Schrauben oder Nägel können in diesem Fall versenkt und anschließend überspachtelt oder eingeputzt werden. Häufig ist das jedoch nicht möglich, weil beispielsweise Fassadenelemente zum Einsatz gelangen, welche die endgültige Oberfläche der Fassade ausbilden. In diesem Fall kann eine Unterkonstruktion gewählt werden, die beispielsweise ein Einhängen der Fassadenelemente über rückseitig angeordnete Hängevorrichtungen ermöglicht. Unterkonstruktion und Hängevorrichtung bilden dann in der Regel gemeinsam ein System aus, dessen Einzelteile genau aufeinander abgestimmt sind. Sollen zudem etwaige Bautoleranzen über die Unterkonstruktion ausgeglichen werden, ist diese mehrteilig auszuführen, um durch eine Verschiebung der Teile zueinander die Toleranzen auszugleichen. Auf diese Weise wird das System immer komplexer. Zudem müssen die Teile in Bezug auf den Untergrund ausgerichtet werden, was sehr aufwendig und zeitraubend ist.

Der vorliegenden Erfindung liegt daher die Aufgabe zugrunde, die Herstellung einer Wand- oder Deckenverkleidung zu vereinfachen, um Zeit und Kosten zu sparen. Ferner soll die Wand- oder Deckenverkleidung in einem einstellbaren Abstand und/oder Winkel am bauseitigen Untergrund befestigbar sein, um etwaige Bautoleranzen ausgleichen zu können.

Aus DE 88 08 787 U1 sind eine Vorrichtung gemäß dem Oberbegriff des Patentanspruchs 1 und ein Verfahren gemäß dem Oberbegriff des Patentanspruchs 13 bekannt. Die Beanspruchbarkeit der bekannten Vorrichtung auf Zug ist jedoch verbesserungsfähig.

Zur Lösung der Aufgabe werden die in Anspruch 1 angegebene Vorrichtung und das in Anspruch 13 angegebene Verfahren zur Herstellung einer Wand- oder Deckenverkleidung vorgeschlagen. Vorteilhafte Weiterbildungen der Vorrichtung und des Verfahrens sind in den jeweiligen Unteransprüchen angegeben.

### Offenbarung der Erfindung

Die zur Herstellung einer Wand- oder Deckenverkleidung vorgeschlagene Vorrichtung umfasst ein platten- oder profilförmiges Bauelement und ein Befestigungssystem, mittels dessen das platten- oder profilförmige Bauelement in einem einstellbaren Abstand und/oder Winkel an einem bauseitigen Untergrund befestigbar ist, wobei das Befestigungssystem ein Abstandselement, ein auf dem Abstandselement verstellbar angeordnetes Gelenkelement sowie ein mit dem Gelenkelement als Gelenk zusammenwirkendes Haltelement mit einem tellerförmigen Abschnitt und einem schaftförmigen Abschnitt umfasst, und wobei der schaftförmige Abschnitt des Halteelements einen Gelenkbereich des Gelenkelements umgreifend in eine umlaufende Nut des Gelenkelements eingreift, so dass eine auf Zug und auf Druck beanspruchbare formschlüssige Verbindung zwischen dem Halteelement und dem Gelenkelement hergestellt ist.

Die auf Zug und Druck beanspruchbare formschlüssige Verbindung zwischen dem Halteelement und dem Gelenkelement stellt sicher, dass das Halteelement unter Last weder vom Gelenkelement gezogen, noch durchgedrückt wird. Da das Haltelement mit dem Gelenkelement zugleich als Gelenk zusammenwirkt, bleibt weiterhin ein Ausrichten des Haltelements hinsichtlich seiner Winkellage in Bezug auf den bauseitigen Untergrund möglich, und zwar vorzugsweise durch eine Kippbewegung des Halteelements um den Gelenkbereich des Gelenkelements herum, wobei der schaftförmige Abschnitt des Halteelements einseitig tiefer in die Nut des Gelenkelements eingreift. Der Gelenkbereich des Gelenkelements ist hierzu bevorzugt als Kugel oder Teilkugel ausgeführt und/oder wird von einem abschnittsweise teilkugelförmig ausgebildeten schaftförmigen Abschnitt des Halteelements umgriffen.

Durch eine Kippbewegung des Haltelements können Winkelfehler ausgeglichen werden, die beispielsweise auf einen unebenen Untergrund und/oder auf Montagetoleranzen zurückzuführen sind. Ferner kann eine gekippte Lage des Haltelements in Bezug auf den Untergrund gezielt dazu eingesetzt werden, gekrümmte oder raumschiefe Wand- oder Deckenoberflächen herzustellen. Mit Anbringen des platten-oder profilförmigen Bauelements am Halteelement richtet sich dieses bevorzugt von selbst aus, so dass ein manuelles Ausrichten entfallen kann.

Über das Gelenkelement ist das Halteelement verstellbar auf dem Abstandselement angeordnet, so dass durch eine Verstellung des Gelenkelements gegenüber dem Abstandselement der Abstand des Haltelements und damit des platten- oder profilförmigen Bauelements in Bezug auf den bauseitigen Untergrund einstellbar ist.

Das Befestigungssystem der vorgeschlagenen Vorrichtung zur Herstellung einer Wand- oder Deckenverkleidung erlaubt somit ein einfaches Ausrichten des platten-oder profilförmigen Bauelements, und zwar durch Einstellen des Abstands und/oder Winkels des Halteelements und damit des platten- oder profilförmigen Bauelements in Bezug auf den bauseitigen Untergrund. Ferner kann das Ausrichten am bereits vollständig montierten Befestigungssystem vorgenommen werden, wodurch der Vorgang weiter vereinfacht wird. Im Ergebnis können somit Zeit und Kosten gespart werden.

Bevorzugt weist das Gelenkelement eine Durchgangsöffhung zur Aufnahme des Abstandselements auf. Auf diese Weise kann der Verstellweg des Gelenkelements auf dem Abstandselement vergrößert werden. Vorzugsweise ist in der Durchgangsöffnung des Gelenkelements ein Innengewinde ausgebildet, über welches das Gelenkelement mit einem Außengewinde des Abstandselements verbunden ist. Die Verstellung des Gelenkelements gegenüber dem Abstandselement kann in diesem Fall durch einfaches Auf- oder Abschrauben des Gelenkelements bewirkt werden, wobei sich das Gelenkelement einschließlich des Halteelements in Richtung des Untergrunds oder vom Untergrund wegbewegt. Die Schraubverbindung zwischen dem Gelenkelement und dem Abstandselement wirkt zudem einer ungewollten Verstellung des Gelenkelements entgegen, da das Gelenkelement über sein Innengewinde am Außengewinde des Abstandselements abgestützt ist. Das Abstandselement kann zumindest abschnittsweise als Gewindebolzen ausgeführt sein und einen oder mehrere Gewindeabschnitte aufweisen.

Des Weiteren bevorzugt weist das Halteelement eine Durchgangsöffnung zur abschnittsweisen Aufnahme des Abstandselements auf. Dadurch kann der Verstellweg des Gelenkelements gegenüber dem Abstandselement nochmals vergrößert werden. Alternativ oder ergänzend kann die Durchgangsöffnung zum Einführen eines Werkzeugs genutzt werden, mittels dessen der Abstand des Gelenkelements und/oder des Abstandselements in Bezug auf den bauseitigen Untergrund verstellbar ist. Hierbei kann es sich insbesondere um ein Schraubwerkzeug handeln, das in drehfestem Eingriff mit dem Gelenkelement oder Abstandselement bringbar ist. Beispielsweise kann das Gelenkelement und/oder das Abstandselement außenumfangseitig eine Geometrie aufweisen, an welche das Werkzeug drehfest ansetzbar ist. Alternativ oder ergänzend kann das Gelenkelement und/oder das Abstandselement stirnseitig eine Geometrie besitzen, in welche das Werkzeug drehfest einsetzbar ist.

Zur Befestigung im bauseitigen Untergrund weist vorzugsweise das Abstandselement einen Befestigungsabschnitt auf. Beispielsweise kann der Befestigungsabschnitt als Gewindeabschnitt ausgebildet sein, der in einen zuvor in den bauseitigen Untergrund eingelassenen Dübel einsetzbar ist. Ferner kann der Befestigungsabschnitt Spreizmittel aufweisen, die den Dübel aufspreizen, so dass das Abstandselement fest im Untergrund verankert ist.

Darüber hinaus kann das Abstandselement mit einem Befestigungselement verbunden sein oder verbunden werden, wobei vorzugsweise das Befestigungselement einen Gewindeabschnitt zur Herstellung der Verbindung mit dem Abstandselement aufweist. Vorzugsweise ist die Verbindung über eine Schraubhülse hergestellt oder herstellbar. Denn die Schraubhülse erlaubt in einfacher Weise den Austausch des Befestigungselements, um dieses an den jeweiligen Untergrund anzupassen. Bei einem Untergrund aus Mauerwerk kann somit ein anderes Befestigungsmittel als beispielsweise bei einer Betonwand- oder -decke eingesetzt werden. Ein völlig anderes Befestigungselement kann erforderlich sein, wenn der Untergrund eine in Holzbauweise errichtete Wand- oder Decke ist.

Analog dem zuvor erwähnten Befestigungsabschnitt des Abstandselements wird auch das Befestigungselement bevorzugt in einen zuvor in den Untergrund eingelassen Dübel eingesetzt. Dabei kann das Befestigungselement Spreizmittel zum Aufspreizen des Dübels aufweisen.

Ferner wird vorgeschlagen, dass der tellerförmige Abschnitt des Halteelements auf der dem schaftförmigen Abschnitt abgewandten Seite Verbindungsmittel zur Herstellung einer kraft-, form- und/oder stoffschlüssigen Verbindung mit dem platten- oder profilförmigen Bauelement aufweist. Die Verbindungsmittel sind vorzugsweise dergestalt, dass die Verbindung durch einfaches Andrücken des platten- oder profilförmigen Bauelements an den tellerförmigen Abschnitt des Haltelements bewirkt werden kann. Dies ist beispielsweise bei einer Klebeverbindung der Fall, so dass die Verbindungsmittel als Klebeband oder dergleichen ausgebildet sein können.

Gemäß einer bevorzugten Ausführungsform der Erfindung sind die Verbindungsmittel stift-, pilzkopf-, haken- und/oder schlingenförmig ausgebildet sind, so dass eine Klettverbindung herstellbar ist. Die Klettverbindung besitzt den Vorteil, dass sie besonders einfach herstellbar und zudem bei Bedarf wieder lösbar ist, um beispielsweise ein platten- oder profilförmiges Bauelement auszutauschen. Ferner ist der vollständige Rückbau der Wand- oder Deckenverkleidung in einer Weise möglich, dass alle Teile wiedereingesetzt oder einem Recycling zugeführt werden können, so dass die Umwelt geschont wird.

Alternativ oder ergänzend wird vorgeschlagen, dass das platten- oder profilförmige Bauelement auf einer Rückseite Verbindungsmittel zur Herstellung einer kraft-, form- und/oder stoffschlüssigen Verbindung mit dem tellerförmigen Abschnitt des Halteelements aufweist. Die Verbindungsmittel sind vorzugsweise dergestalt, dass die Verbindung durch einfaches Andrücken des platten- oder profilförmigen Bauelements an den tellerförmigen Abschnitt des Haltelements bewirkt werden kann. Zur Herstellung einer Klebeverbindung können die Verbindungsmittel als Klebebänder oder dergleichen ausgebildet sein. Zur Herstellung einer Klettverbindung sind vorzugsweise die Verbindungsmittel stift-, pilzkopf-, haken- und/oder schlingenförmig ausgebildet.

Zur Ausbildung stift-, pilzkopf-, haken- und/oder schlingenförmiger Verbindungsmittel kann bzw. können das Halteelement und/oder das platten- oder profilförmige Bauelement ein Klettmaterial aufweisen, das mit dem Halteelement und/oder dem platten- oder profilförmigen Bauelement verbunden, vorzugsweise verklebt, ist. Die stift-, pilzkopf-, haken- und/oder schlingenförmigen Verbindungsmittel können aber auch durch das jeweilige Element selbst ausgebildet werden. Dies gilt insbesondere für das Halteelement. Ferner können das Halteelement und das platten- oder profilförmige Bauelement gleiche oder unterschiedliche Verbindungsmittel aufweisen, soweit gewährleistet ist, dass diese kraft- und/oder formschlüssig ineinandergreifen, wenn das platten- oder profilförmige Bauelement an den tellerförmigen Abschnitt des Halteelements gedrückt wird. Beispielsweise kann das Halteelement hakenförmige Verbindungsmittel besitzen, die sich beim Andrücken des platten-oder profilförmigen Bauelements in dessen schlingenförmigen Verbindungsmitteln verhaken.

In Weiterbildung der Erfindung wird vorgeschlagen, dass das Abstandselement mit einem weiteren Befestigungselement, insbesondere in Form einer Strebe, eines Druckstabs und/oder eines Spannseils, verbunden ist, so dass die mittels des Befestigungssystems abzutragenden Lasten an mindestens zwei Stellen in den bauseitigen Untergrund eingeleitet werden. Durch die Verteilung der Lasten auf mehrere im oder am bauseitigen Untergrund befestigte Befestigungselemente kann die Belastbarkeit des Systems gesteigert werden. Dies gilt insbesondere, wenn das weitere Befestigungselement nach Art einer Strebe ausgeführt und oberhalb oder unterhalb des Abstandselements angeordnet ist. Sofern das weitere Befestigungselement oberhalb des Abstandselements am bauseitigen Untergrund befestigt wird, wird es vorrangig auf Zug beansprucht und kann beispielsweise als Zugseil bzw. Spannseil ausgebildet werden. Sofern das weitere Befestigungselement unterhalb des Abstandselements im oder am bauseitigen Untergrund befestigt wird, wird es auf Druck beansprucht. In diesem Fall bietet sich die Ausführung des weiteren Befestigungselements als Druckstab an.

Wird in entsprechender Weise die Belastbarkeit des Befestigungssystems gesteigert, kann bzw. können die Lasten erhöht und/oder der Abstand der Wand- oder Deckenverkleidung zum bauseitigen Untergrund vergrößert werden.

Sofern das weitere Befestigungselement ein Spannseil ist, ist dieses bevorzugt einenends, vorzugsweise über eine Schlaufe oder Öse, verstellbar auf dem Abstandselement angeordnet. Andernends kann das Spannseil unter Verwendung eines Befestigungsmittels, beispielsweise in Form einer Schraube, am bauseitigen Untergrund befestigt werden. Das Spannseil entlastet das Abstandselement, das einen Kragarm ausbildet, da die Last durch das zu befestigende platten- oder profilförmige Bauelement außen angreift. Je größer der Abstand des platten- oder profilförmigen Bauelements zum bauseitigen Untergrund ist, desto größer ist auch die Last. Wird nun der Kragarm durch ein Spannseil unterstützt, kann ein Teil der Last über das Spannseil in den Untergrund eingeleitet werden, so dass der Kragarm entlastet wird. Die Verstellbarkeit des mit dem Abstandselement verbundenen Endes des Spannseils gegenüber dem Abstandselement ermöglicht den Ausgleich von Bau- und/oder Montagetoleranzen. Darüber hinaus ist ein nachträgliches Spannen des Spannseils möglich.

Das Spannen des Spannseils wird vorzugsweise mittels einer Schraubhülse oder Mutter bewirkt, die auf dem Abstandselement angeordnet ist. Das heißt, dass zum Spannen des Spannseils die Schraubhülse oder Mutter auf dem Außengewinde des Abstandselements weiter aufgeschraubt wird, so dass sie sich vom Untergrund wegbewegt und das mit dem Abstandselement verbundene Ende des Spannseils vom Untergrund wegdrückt. Die Schraubhülse oder Mutter ist hierzu hinter dem Spannseil angeordnet, das heißt zwischen dem Spannseil und dem Untergrund. Die Schraubhülse oder Mutter dient demnach zugleich der Lagesicherung des Spannseils, da dieses an der Schraubhülse oder Mutter abgestützt ist.

In einer besonders einfachen Ausgestaltung einer erfindungsgemäßen Wand- oder Deckenverkleidung ist das am Untergrund zu befestigenden Bauelement bevorzugt plattenförmig. Hierbei kann es sich insbesondere um eine Bauplatte zur Wand- oder Deckenverkleidung, beispielsweise um eine Holzwerkstoffplatte oder eine Gipskartonplatte mit bereits fertiger Oberfläche oder einer streich- und/oder tapezierfähigen Oberfläche handeln. Ferner können Dekorplatten als plattenförmige Bauelemente zum Einsatz gelangen, die beispielsweise als Verbundplatten aus unterschiedlichen Materialen hergestellt sind. Derartige Wand- oder Deckenverkleidungen sind vorrangig für den Innenausbau von Gebäuden geeignet.

Bei der Bauplatte kann es sich auch um eine Putzträgerplatte handeln, die vorrangig im Außenbereich zur Herstellung einer Putzfassade zur Anwendung gelangt. Die Putzträgerplatte kann dabei bereits mit einer Putzschicht versehen sein, so dass die Herstellung der Wand- oder Deckenverkleidung bzw. der Putzfassade weiter vereinfacht wird.

Ferner kann das plattenförmige Bauelement ein plattenförmiges Fassadenelement sein, das zumindest teilweise aus Glas, Naturstein, Werkstein, Holz, Metall und/oder Kunststoff gefertigt ist. Ein solches Fassadenelement bildet in der Regel die endgültige Fassadenoberfläche aus, so dass mit der Befestigung des Fassadenelements am bauseitigen Untergrund die Fassade bereits fertig gestellt ist. Häufig sind derartige Fassadenelemente als Verbundplatten ausgeführt, die eine Trägerschicht und eine außenliegende Dekorschicht aufweisen. Auf diese Weise kann oftmals das Gewicht der Fassadenelemente deutlich reduziert werden, ohne die erforderliche Stabilität des Fassadenelements zu gefährden.

Fassadenelemente der vorstehend genannten Art werden in der Regel zur Ausbildung vorgehängter hinterlüfteter Fassaden verwendet. Um eine ausreichende Hinterlüftung zu gewährleisten, ist oftmals eine Unterkonstruktion erforderlich, die den Abstand des plattenförmigen Fassadenelements zu einem anderen Flächenelement, wie beispielsweise einer Wärmedämmplatte, einhält.

Insbesondere zur Ausbildung einer derartigen Unterkonstruktion kann demnach das am bauseitigen Untergrund zu befestigende Bauelement auch profilförmig sein. Beispielsweise kann das profilförmige Bauelement ein Metallprofil einer Unterkonstruktion zur Ausbildung einer vorgehängten hinterlüfteten Fassade oder eine Holzlatte sein. Das am Halteelement zu befestigende profilförmige Bauelement kann zudem Teil einer komplex aufgebauten Unterkonstruktion sein, die mehrere Befestigungsebenen aufweist, um eine durchgehende Hinterlüftung sicherzustellen. An der Unterkonstruktion kann dann ein plattenförmiges Bauelement, insbesondere plattenförmiges Fassadenelement, befestigt werden, das die eigentliche Wand- oder Deckenverkleidung darstellt.

Als weiterbildende Maßnahme wird ferner vorgeschlagen, dass der tellerförmige Abschnitt des Halteelements auf der dem schaftförmigen Abschnitt zugewandten Seite eine Auflagefläche zur Auflage auf einer Wärmedämmplatte aufweist. Das Befestigungssystem kann in diesem Fall zugleich zur Lagesicherung der Wärmedämmplatte eingesetzt werden, indem vorzugsweise die Wärmedämmplatte zwischen dem bauseitigen Untergrund und dem tellerförmigen Abschnitt des Halteelements eingeklemmt wird. Die Vorrichtung kann somit die Herstellung einer wärmegedämmten Fassade vereinfachen.

Vorzugsweise besitzt die am tellerförmigen Abschnitt des Halteelements ausgebildete Auflagefläche mindestens eine dorn- oder rippenähnliche Erhebung zur Verbindung mit der Wärmedämmplatte. Die dorn- oder rippenähnliche Erhebung vermag sich in den Dämmstoff einzudrücken, so dass die Lagesicherung der Wärmedämmplatte weiter verbessert wird, da sie zudem gegen Verrutschen gesichert ist.

Zur Lösung der eingangs genannten Aufgabe wird ferner ein Verfahren zur Herstellung einer Wand- oder Deckenverkleidung vorgeschlagen. Bei diesem Verfahren wird ein platten- oder profilförmiges Bauelement in einem einstellbaren Abstand und/oder Winkel an einem bauseitigen Untergrund befestigt. Zur Befestigung des platten- oder profilförmigen Bauelements wird ein Befestigungssystem verwendet, das ein Abstandselement, ein auf dem Abstandselement verstellbar angeordnetes Gelenkelement sowie ein mit dem Gelenkelement als Gelenk zusammenwirkendes Haltelement mit einem tellerförmigen Abschnitt und einem schaftförmigen Abschnitt umfasst, wobei der schaftförmige Abschnitt einen Gelenkbereich des Gelenkelements umgreift und dabei in eine umlaufende Nut des Gelenkelements eingreift, so dass eine auf Zug und auf Druck beanspruchbare formschlüssige Verbindung zwischen dem Halteelement und dem Gelenkelement hergestellt ist. Durch Verstellen des Gelenkelements gegenüber dem Abstandselement wird dabei der Abstand des platten- oder profilförmigen Bauelements in Bezug auf den bauseitigen Untergrund eingestellt. Alternativ oder ergänzend kann durch Kippen des Haltelements gegenüber dem Gelenkelement der Winkel des platten- oder profilförmigen Bauelements in Bezug auf den bauseitigen Untergrund eingestellt werden. Das bei dem Verfahren zum Einsatz gelangende Befestigungssystem ermöglicht somit in einfacher Weise eine Einstellung des Abstands und/oder des Winkels des Haltelements und damit des hieran zu befestigenden platten- oder profilförmigen Bauelements in Bezug auf den bauseitigen Untergrund. Dadurch wird die Herstellung der Wand- oder Deckenverkleidung deutlich vereinfacht. Insbesondere kann die Einstellung des Abstands und/oder Winkels nachträglich vorgenommen werden, das heißt nachdem die Befestigungsvorrichtung bereits am bauseitigen Untergrund befestigt worden ist.

Bei der Durchführung des Verfahrens gelangt vorzugsweise die zuvor beschriebene erfindungsgemäße Vorrichtung zum Einsatz, da diese die zur Durchführung des Verfahrens erforderlichen konstruktiven Voraussetzungen erfüllt. Hinsichtlich der konkreten Ausgestaltung des bei dem Verfahren bevorzugt zum Einsatz gelangenden Befestigungssystems und/oder platten- oder profilförmigen Bauelements kann demnach auf die vorstehende Beschreibung verwiesen werden.

Bei dem vorgeschlagenen Verfahren zur Herstellung einer Wand- oder Deckenverkleidung wird vorzugsweise das Abstandselement des Befestigungssystems über einen Befestigungsabschnitt oder ein Befestigungselement im bauseitigen Untergrund befestigt. Der Befestigungsabschnitt ist am Abstandselement selbst ausgebildet, während das Befestigungselement ein separates Element darstellt, das mit dem Abstandselement verbunden werden muss. Vorzugsweise wird die Verbindung mittels einer Schraubhülse hergestellt. Hierzu ist am Abstandselement und am Befestigungselement jeweils ein Gewindeabschnitt vorgesehen. Die Schraubverbindung erlaubt nicht nur eine einfache Montage, sondern darüber hinaus eine Längeneinstellung, so dass eine zusätzliche Möglichkeit zur Abstandseinstellung geschaffen wird. Ferner kann das Befestigungselement einfach ausgetauscht werden, so dass ein an den jeweiligen Untergrund angepasstes Befestigungselement eingesetzt werden kann.

Die Befestigung des Abstandselements oder des Befestigungselements im bauseitigen Untergrund kann unter Verwendung eines Dübels erfolgen. In diesem Fall weist vorzugsweise der Befestigungsabschnitt des Abstandselements oder das Befestigungselement Spreizmittel zum Aufspreizen des Dübels auf.

Vorteilhafterweise ist das Befestigungssystem modular aufgebaut, so dass sämtliche Elemente des Systems austauschbar sind. Dies ermöglicht beispielsweise den Einsatz unterschiedliche langer Abstandselemente, um unterschiedlich große Abstände zu realisieren. Ferner kann bei Bedarf das Halteelement ausgetauscht werden, um beispielsweise ein Halteelement mit einem kleineren oder größeren tellerförmigen Abschnitt und/oder anders gestalteten Verbindungsmitteln einzusetzen.

Der modulare Aufbau des Befestigungssystems setzt voraus, dass die Elemente lösbar miteinander verbunden sind bzw. lösbar miteinander verbunden werden. Hierzu eignen sich insbesondere Steck-, Klemm-, Rast-, Press- und/oder Schraubverbindungen. Schraubverbindungen besitzen den Vorteil, dass sie in einfacher Weise eine gezielte Längenverstellung zulassen und zugleich jedoch eine ungewollte Längenverstellung verhindern. Daher wird vorzugsweise das Gelenkelement mit dem Abstandselement über eine Schraubverbindung verbunden.

Zur Vormontage des Befestigungssystems wird daher bevorzugt das Gelenkelement über ein Innengewinde auf ein Außengewinde des Abstandselements aufgeschraubt. Das Innengewinde ist dabei bevorzugt in einer Durchgangsöffnung des Gelenkelements ausgebildet ist, um einen maximalen Verstellweg zu ermöglichen.

Die Verbindung des Halteelements mit dem Gelenkelement ist vorzugsweise als Steck- bzw. Rastverbindung ausgebildet, um den gewünschten Formschluss in Zug- und in Druckrichtung zu erzielen. Zur Herstellung der Steck- bzw. Rastverbindung wird vorzugsweise das Gelenkelement in den schaftförmigen Abschnitt des Halteelements eingeführt. Das Halteelement weist hierzu bevorzugt eine DurchgangsÖffnung auf, so dass das Gelenkelement durch den tellerförmigen Abschnitt hindurch in den schaftförmigen Abschnitt eingesetzt werden kann, bis der schaftförmige Abschnitt in die Nut des Gelenkelements eingreift. Vorzugsweise ist dem Gelenkbereich des Gelenkelements ein Einführkonus vorgelagert, der durch die Nut vom Gelenkbereich des Gelenkelements getrennt ist. Der Einführkonus erleichtert das Einsetzen des Gelenkelements, da hierüber der schaftförmige Abschnitt kontinuierlich eine Aufweitung erfährt, bis er hinter dem Einführkonus in die Nut eingreift.

Die Durchgangsöffnung des Halteelements weist weitere Vorteile auf. Beispielsweise kann durch die Durchgangsöffnung des Halteelements ein Werkzeug zur Abstandsverstellung eingeführt werden. Das Werkzeug wird hierzu in drehfestem Eingriff mit dem in der Durchgangsöffnung abschnittsweise aufgenommenen Gelenkelement und/oder Abstandselement gebracht und gedreht. Bei dem Werkzeug handelt es sich demnach bevorzugt um ein Schraubwerkzeug bzw. einen Schlüssel. Die drehfeste Verbindung des Werkzeugs mit dem Gelenkelement oder Abstandselement kann beispielsweise über eine Geometrie hergestellt werden, die vorzugsweise außenumfangseitig oder stirnseitig am Gelenkelement bzw. am Abstandselement ausgebildet ist. Ferner wird durch die Durchgangsöffnung des Halteelements der Verstellweg des Gelenkelements bei einer Verstellung gegenüber dem Abstandselement maximiert.

In Weiterbildung des Verfahrens wird vorgeschlagen, dass das Abstandselement mit einem weiteren Befestigungselement, insbesondere in Form einer Strebe, eines Druckstabs und/oder eines Spannseils, verbunden wird, so dass die mittels des Befestigungssystems abzutragenden Lasten an mindestens zwei Stellen in den bauseitigen Untergrund eingeleitet werden. Die dadurch bewirkte Entlastung des Befestigungssystems erhöht die Belastbarkeit des Systems. Das heißt, das größere Lasten am bauseitigen Untergrund befestigt werden können und/oder der Abstand der Wand- oder Deckenverkleidung zum bauseitigen Untergrund vergrößert werden kann.

Wird beispielsweise ein Spannseil als weiteres Befestigungselement verwendet, kann dieses einenends, vorzugsweise über eine Schlaufe oder Öse, mit dem Abstandselement verbunden und andernends unter Verwendung eines Befestigungsmittels, beispielsweise in Form einer Schraube, am bauseitigen Untergrund befestigt werden. Durch das zusätzliche Abspannen kann eine deutliche Entlastung des Befestigungssystems bewirkt werden.

Zum Spannen des Spannseils wird vorzugsweise eine auf dem Abstandselement angeordnete Schraubhülse oder Mutter verstellt. Die Schraubhülse oder Mutter ist hierzu hinter dem Spannseil, das heißt zwischen dem Spannseil und dem bauseitigen Untergrund angeordnet, so dass die Schraubhülse oder Mutter, wenn sie vom Untergrund wegbewegt wird, das mit dem Abstandselement verbundene Ende des Spannseils vom Untergrund wegdrückt. Zum einfachen Verstellen der Schraubhülse bzw. Mutter ist diese bevorzugt über eine Schraubverbindung mit dem Abstandselement verbunden bzw. auf das Abstandselement aufgeschraubt.

Das platten- oder profilförmigen Bauelement wird vorzugsweise kraft-, form- und/oder stoffschlüssig mit dem Halteelement verbunden wird. Beispielsweise kann die Verbindung mittels einer Klebeverbindung hergestellt werden. Vorzugsweise wird die Verbindung unter Zuhilfenahme von Verbindungsmitteln hergestellt, die auf dem tellerförmigen Abschnitt des Halteelements und/oder auf dem platten- oder profilförmigen Bauelement angeordnet sind. Als Verbindungsmittel kann beispielsweise ein Klebeband dienen. Vorteilhafterweise sind jedoch die Verbindungsmittel stift-, pilzkopf-, haken- und/oder schlingenförmig ausgebildet, so dass eine Klettverbindung herstellbar ist. Diese besitzt gegenüber einer Klebeverbindung den Vorteil, dass sie einfach herzustellen und bei Bedarf wieder lösbar ist, um beispielsweise ein platten- oder profilförmiges Bauelement auszutauschen oder den vollständigen Rückbau der Wand- oder Deckenverkleidung zu ermöglichen. Zur Herstellung der Klettverbindung werden vorzugsweise die stift-, pilzkopf-, haken- und/oder schlingenförmigen Verbindungsmittel des Halteelements in Kontakt mit den stift-, pilzkopf-, haken- und/oder schlingenförmigen Verbindungsmitteln des platten- oder profilförmigen Bauelements gebracht, so dass die jeweiligen Verbindungsmittel kraft- und/oder formschlüssig ineinandergreifen. Die Verbindungsmittel des Halteelements und des Bauelements können dabei gleich oder unterschiedlich ausgebildet sein. Beispielsweise können hakenförmige und schlingenförmige Verbindungsmittel zur Herstellung eines Formschlusses eingesetzt werden, da sich die hakenförmigen Verbindungsmittel in den schlingenförmigen Verbindungsmitteln verhaken.

Die Verbindung des platten- oder profilförmigen Bauelements mit dem Halteelement über eine Klettverbindung besitzt ferner den Vorteil, dass sie nicht sichtbar ist. Denn die stift-, pilzkopf-, haken- und/oder schlingenförmigen Verbindungsmittel werden durch das platten- oder profilförmige Bauelement abgedeckt. Die Klettverbindung eröffnet somit einen großen Gestaltungsspielraum in Bezug auf die herzustellende Wand- oder Deckenverkleidung.

In einer besonders vorteilhaften Ausgestaltung des erfindungsgemäßen Verfahrens wird das Befestigungssystem zur Befestigung des platten- oder profilförmigen Bauelements am bauseitigen Untergrund zugleich zur Befestigung einer Wärmedämmplatte eingesetzt. Das Befestigungssystem vermag somit einen üblicherweise zur Lagesicherung eingesetzten Dämmstoffdübel zu ersetzen, so dass die Anzahl der darüber hinaus eingesetzten Dämmstoffdübel reduziert werden oder auf den Einsatz von Dämmstoffdübeln vollständig verzichtet werden kann. Vorzugsweise wird zur Befestigung der Wärmedämmplatte diese zwischen dem tellerförmigen Abschnitt des Halteelements und dem Untergrund eingeklemmt, so dass an dem Befestigungselement selbst keine Veränderung vorgenommen werden muss, um die Zusatzfunktion zu ermöglichen. In Weiterbildung des Befestigungssystems wird vorgeschlagen, dass die dem schaftförmigen Abschnitt des Halteelements zugewandte Seite des tellerförmigen Abschnitts mindestens eine dorn- oder rippenähnliche Erhebung aufweist, die beim Befestigen in den Dämmstoff der Wärmedämmplatte eindrückt wird. Auf diese Weise wird die Wärmedämmplatte besser gegen Verrutschen gesichert.

Bevorzugte Ausführungsformen einer erfindungsgemäßen Vorrichtung werden nachfolgend anhand der beigefügten Zeichnungen näher beschrieben. Ferner wird anhand der Zeichnungen das erfindungsgemäße Verfahren erläutert. Es zeigen:
Fig. 1 eine Seitenansicht einer erfindungsgemäßen Vorrichtung gemäß einer ersten bevorzugten Ausführungsform,
Fig. 2 einen Längsschnitt durch die Vorrichtung der Fig. 1,
Fig. 3 einen vergrößerten Ausschnitt des Längsschnitts der Fig. 2 im Bereich des Halteelements,
Fig. 4 eine Draufsicht auf das Halteelement der Fig. 3,
Fig. 5 eine Schnittansicht einer erfindungsgemäßen Vorrichtung gemäß einer zweiten bevorzugten Ausführungsform,
Fig. 6 eine Draufsicht auf eine Wandverkleidung, die mittels der Vorrichtung der Fig. 5 realisiert worden ist,
Fig. 7 eine perspektivische Darstellung einer erfindungsgemäßen Vorrichtung gemäß einer dritten bevorzugten Ausführungsform und
Fig. 8 eine Seitenansicht der Vorrichtung zur Abspannung des Befestigungssystems.

### Ausführliche Beschreibung der Zeichnungen

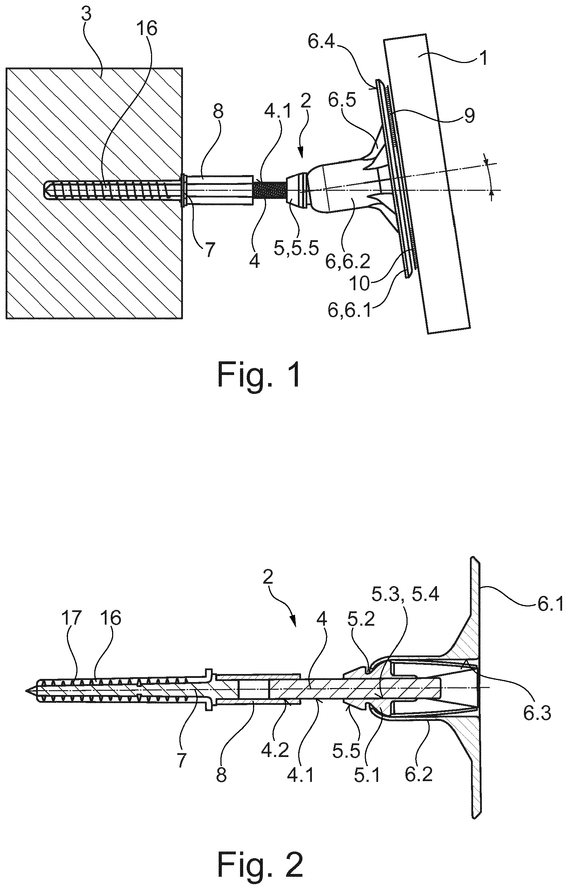

Die in der Fig. 1 dargestellte Vorrichtung zur Herstellung einer Wand- oder Deckenverkleidung umfasst ein platten- oder profilförmiges Bauelement 1 und ein Befestigungssystem 2, mittels dessen das platten- oder profilförmige Bauelement 1 an einem bauseitigen Untergrund 3 befestigbar ist. Bei dem bauseitigen Untergrund 3 handelt es sich vorliegend um eine Wand, beispielsweise aus Mauerwerk. Sie könnte aber auch aus Beton gefertigt oder in Holzbauweise errichtet worden sein. Darüber hinaus muss es sich bei dem bauseitigen Untergrund 3 nicht zwingend um eine Wand handeln, sondern es kann auch eine Decke sein, wenn beispielsweise die erfindungsgemäße Vorrichtung zur Herstellung einer Deckenverkleidung, insbesondere einer abgehängten Decke eingesetzt wird.

Das dargestellte Befestigungssystem 2 ist modular aufgebaut. Das heißt, dass einzelne Elemente des Systems austauschbar sind, beispielsweise um das Befestigungssystem 2 an die jeweilige Einbausituation, insbesondere an den jeweiligen bauseitigen Untergrund 3 anzupassen.

Das Befestigungssystem 2 der erfindungsgemäßen Vorrichtung umfasst zwingend ein Abstandselement 4, ein Gelenkelement 5 und ein Halteelement 6. Ferner kann ein Befestigungselement 7 zur Befestigung im bauseitigen Untergrund 3 vorgesehen sein, wenn diese Funktion nicht zugleich durch das Abstandselement 4 erfüllt wird. Das Befestigungssystem 2 der Fig. 1 weist ein solches Befestigungselement 7 auf. Es ist in Form einer Schraube ausgeführt und mit dem Abstandselement 4 über eine Schraubhülse 8 verbunden. Am Abstandselement 4 ist hierzu ein Befestigungsabschnitt 4.2 mit einem Außengewinde 4.1 ausgeführt (siehe Fig. 2). Alternativ kann das Befestigungssystem 2 auch über den Befestigungsabschnitt 4.2 des Abstandselements 4 im bauseitigen Untergrund 3 befestigt werden. Die Schraubhülse 8 und das Befestigungselement 7 sind dann verzichtbar.

Zur Verankerung des Befestigungssystems 2 im bauseitigen Untergrund 3 ist ein in den bauseitigen Untergrund 3 eingelassener Dübel 16 vorgesehen. Vorliegend ist das Befestigungselement 7 in den Dübel 16 eingesetzt, wobei außenumfangseitig angeordnete Spreizmittel 17 (siehe Fig. 2) ein Aufspreizen des Dübels 16 im Untergrund 3 bewirken.

Analog dem Befestigungselement 7 könnte auch der Befestigungsabschnitt 4.2 des Abstandselements 4 in den Dübel 16 eingesetzt werden, wenn auf ein zusätzliches Befestigungselement 7 verzichtet werden soll.

Das Außengewinde 4.1 des Abstandselements 4 erstreckt sich vorliegend über die gesamte Länge des Abstandselements 4. Da das Gelenkelement 5 ein in einer Durchgangsöffnung 5.3 ausgebildetes Innengewinde 5.4 aufweist, kann das Gelenkelement 5 auf das Abstandselement 4 aufgeschraubt werden. Die Schraubverbindung gewährleistet zudem eine Verstellbarkeit des Gelenkelements 5 gegenüber dem Abstandselement 4, so dass hierüber der Abstand des zu befestigenden platten- oder profilförmigen Bauelements 1 in Bezug auf den bauseitigen Untergrund 3 einstellbar ist.

Das ferner vorgesehene Halteelement 6 ist mit dem Gelenkelement 5 verbunden und zwar in der Weise, dass es mit dem Gelenkelement 5 ein Gelenk ausbildend zusammenwirkt. Das Halteelement 6 dient der Aufnahme des platten- oder profilförmigen Bauelements 1. Über das Gelenk ist die Winkellage des Halteelements 6 und damit des platten- oder profilförmigen Bauelements 1 in Bezug auf den bauseitigen Untergrund 3 einstellbar, beispielsweise um Bau- oder Montagetoleranzen auszugleichen oder eine Wand- bzw. Deckenverkleidung herzustellen, deren Oberfläche gekrümmt oder gegenüber dem Untergrund 3 geneigt ist.

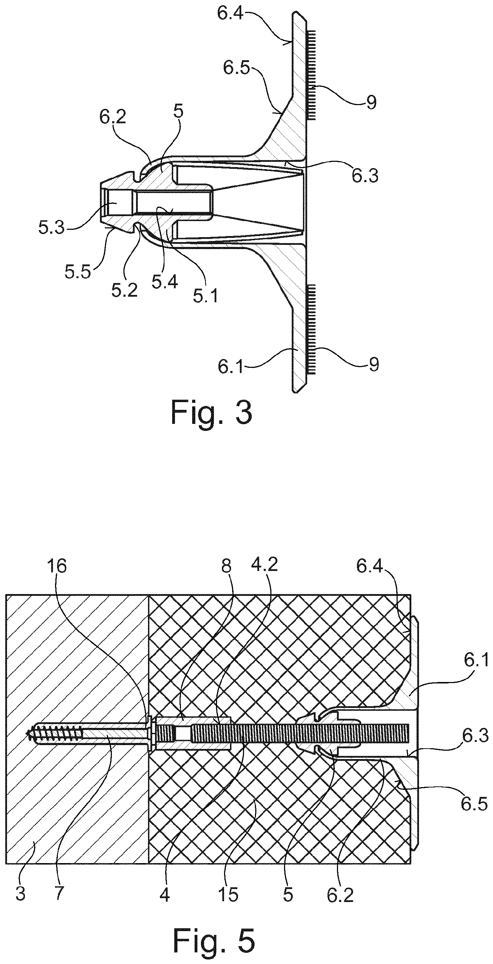

Zur Ausbildung eines Gelenks weist das Gelenkelement 5 einen teilkugelförmig ausgebildeten Gelenkbereich 5.1 auf, der durch eine Nut 5.2 von einem Einführkonus 5.5 getrennt ist. Der Gelenkbereich 5.1 wird von einem schaftförmigen Abschnitt 6.2 des Halteelements 6 umgriffen, und zwar in der Weise, dass der schaftförmige Abschnitt 6.2 in die Nut 5.2 eingreift. Auf diese Weise wird eine auf Zug und Druck beanspruchbare Verbindung geschaffen (siehe Fig. 2 und Fig. 3). Der Einführkonus 5.5 erleichtert die Herstellung der Verbindung, wenn das Gelenkelement 5 mit dem Einführkonus 5.5 voran von vorne in den schaftförmigen Abschnitt 6.2 eingesetzt wird. Denn der Einführkonus 5.5 bewirkt eine Aufweitung des schaftförmigen Abschnitts 6.2 des Halteelements 6, so dass dieser hinter dem Einführkonus 5.5 in die Nut 5.2 einschnappen kann. Um das Gelenkelement 5 von vorne in das Halteelement 6 einsetzen zu können, weist das Halteelement 6 eine Durchgangsöffnung 6.3 auf, die sich durch einen tellerförmigen Abschnitt 6.1 des Halteelements 6 zur Aufnahme des platten- oder profilförmigen Bauelements 1 erstreckt (siehe Fig. 2 und Fig. 3). Da das Abstandselement 4 in einer Durchgangsöffhung 5.3 des Gelenkelements 5 und das Gelenkelement 5 in einer Durchgangsöffnung 6.3 des Halteelements 6 aufgenommen sind, ist zudem der Verstellweg des Gelenkelements 5 zur Einstellung des Abstands in Bezug auf den bauseitigen Untergrund 3 maximal.

Wie insbesondere der Fig. 1 und der Fig. 3 zu entnehmen ist, weist das Halteelement 6 stift-, pilzkopf-, haken- und/oder schlingenförmige Verbindungsmittel 9 auf, die mit stift-, pilzkopf-, haken- und/oder schlingenförmigen Verbindungsmitteln 10 am platten- oder profilförmigen Bauelement 1 zusammenwirken. Die Verbindungsmittel 9 sind auf dem tellerförmigen Abschnitt 6.1 des Halteelements 6 ungeordnet, und zwar auf der dem schaftförmigen Abschnitt 6.2 abgewandten Seite, so dass sie dem platten- oder profilförmigen Bauelement 1 zugewandt sind. Die Verbindungsmittel 10 sind auf einer dem Halteelement 6 zugewandten Rückseite des platten- oder profilförmigen Bauelements 1 angeordnet. Um die Verbindung zwischen dem platten- oder profilförmigen Bauelement 1 und dem Halteelement 6 herzustellen, müssen lediglich die Verbindungsmittel in Überdeckung gebracht und das platten- oder profilförmige Bauelement 1 an das Halteelement 6 gedrückt werden. Dabei greifen die Verbindungsmittel 9, 10 kraft- und/oder formschlüssig ineinander, so dass eine Klettverbindung ausgebildet wird. Die Klettverbindung ist nicht nur einfach herzustellen, so dass die Anbringung des platten- oder profilförmigen Bauelements 1 vereinfacht wird, sondern bei Bedarf wieder lösbar. Das heißt, dass in einfacher Weise der Austausch einzelner platten- oder profilförmiger Bauelemente 1 möglich ist bzw. die Wand- oder Deckenverkleidung auch wieder zurückgebaut werden kann, um sie zu recyceln. Insofern erweist sich die Klettverbindung als besonders vorteilhaft im Vergleich zu anderen Verbindungsarten, wie beispielsweise der Klebeverbindung, die grundsätzlich jedoch auch einsetzbar ist.

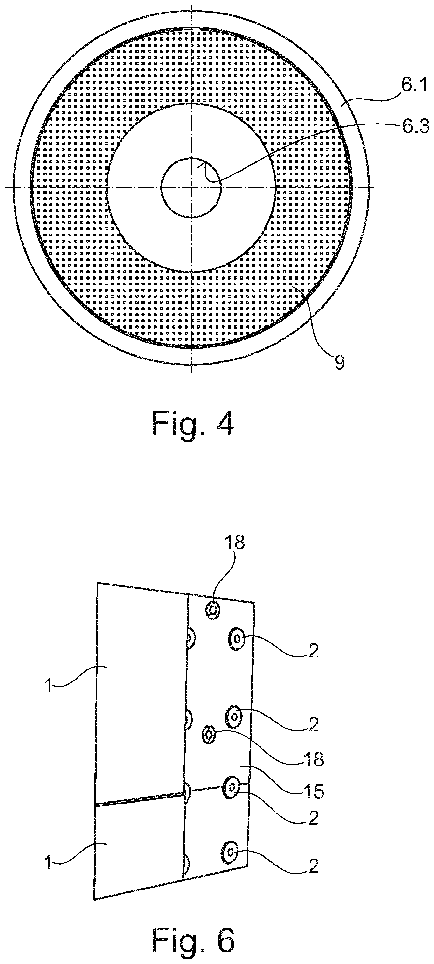

Die stift-, pilzkopf-, haken- und/oderschlingenförmigen Verbindungsmittel 9, 10 können durch eine Art Klettband ausgebildet werden, das auf dem tellerförmigen Abschnitt 6.1 des Halteelements 6 und/oder auf dem platten- oder profilförmigen Bauelement 1 angeordnet wird. Eine mögliche Form der Anordnung auf dem tellerförmigen Abschnitt 6.1 des Halteelements 6 ist in der Fig. 4 dargestellt. Darüber hinaus kann das Halteelement 6 aber auch selbst stift-, pilzkopf-, haken- und/oder schlingenförmige Verbindungsmittel 9 ausbilden.

Der Fig. 5 ist eine weitere bevorzugte Ausführungsform einer erfindungsgemäßen Vorrichtung zu entnehmen. Die Vorrichtung besitzt eine Zusatzfunktion, da mittels des Befestigungssystems 2 zugleich eine Wärmedämmplatte 15 am bauseitigen Untergrund 3 befestigt wird. Hierzu bedarf es grundsätzlich keiner konstruktiven Änderungen am Befestigungssystem 2, so dass auch das Befestigungssystem 2 der Figuren 1 bis 4 in gleicher Weise einsetzbar ist. Dies gilt insbesondere, da bei dem Befestigungssystem 2 der Figuren 1 bis 4 der tellerförmige Abschnitt 6.1 des Halteelements 6 gleich dem Halteelement 6 der in der Fig. 5 dargestellten Vorrichtung ausgebildet ist und eine Auflagefläche 6.4 mit rippenartigen Erhebungen 6.5 aufweist (siehe insbesondere Fig. 1), die sich in die Wärmedämmplatte 15 drücken, so dass diese gegen Verrutschen gesichert ist (siehe Fig. 5). Durch die Zusatzfunktion der erfindungsgemäßen Vorrichtung können herkömmliche Dämmstoffdübel 18, wie sie beispielhaft in der Fig. 6 dargestellt sind, die eine Wandverkleidung im Aufbau zeigt, eingespart werden.

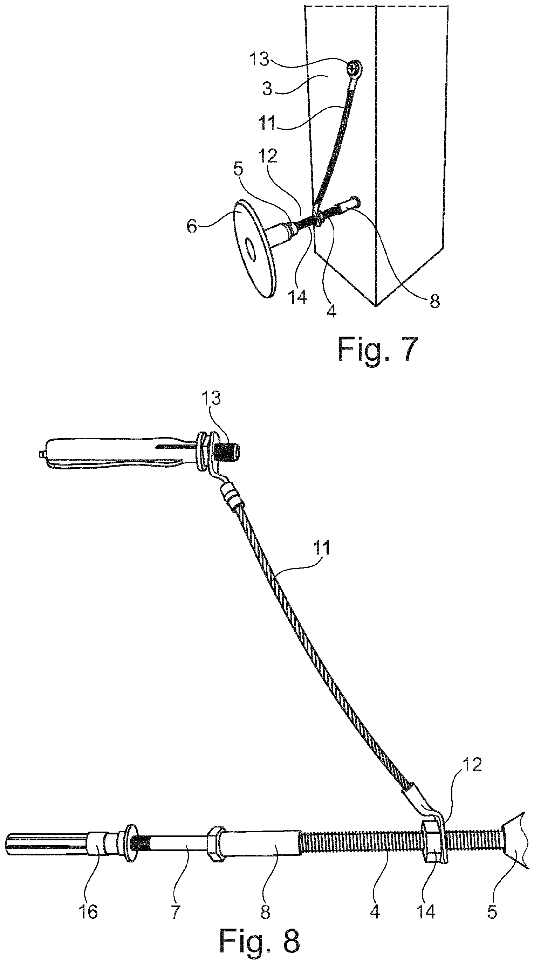

In der Fig. 7 ist eine Weiterentwicklung einer erfindungsgemäßen Vorrichtung gezeigt, die in der Lage ist, besonders hohe Lasten aufzunehmen. Denn das Befestigungssystem 2 der Vorrichtung weist ein weiteres Befestigungselement 11 in Form eines Spannseils auf. Über das Spannseil ist das Befestigungssystem 2 zusätzlich abgespannt. Ein erstes Ende des Spannseils ist hierzu über eine Öse 12 mit dem Abstandselement 4 verbunden (siehe Fig. 8). Ein zweites Ende des Spannseils ist über ein Befestigungsmittel 13 am bauseitigen Untergrund 3 befestigt. Zum Spannen des Spannseils ist hinter dem Spannseil eine Mutter 14 auf dem Abstandselement 4 angeordnet (siehe Fig. 8), so dass die Öse 12 des Spannseils an der Mutter 14 abgestützt ist. Wird nun die Mutter 14 vom Untergrund 3 wegbewegt, drückt diese die Öse 12 nach vorne, wobei das Spannseil gespannt wird.

### Bezugszeichenliste

- 1: platten- oder profilförmiges Bauelement
- 2: Befestigungssystem
- 3: Untergrund
- 4: Abstandselement
4.1 Außengewinde
4.2 Befestigungsabschnitt
- 5: Gelenkelement
5.1 Gelenkbereich
5.2 Nut
5.3 Durchgangsöffnung
5.4 Innengewinde
5.5 Einführkonus
- 6: Halteelement
6.1 tellerförmiger Abschnitt
6.2 schaftförmiger Abschnitt
6.3 Durchgangsöffnung
6.4 Auflagefläche
6.5 Erhebung
- 7: Befestigungselement
- 8: Schraubhülse
- 9: Verbindungsmittel
- 10: Verbindungsmittel
- 11: Befestigungselement
- 12: Öse
- 13: Befestigungsmittel
- 14: Mutter
- 15: Wärmedämmplatte
- 16: Dübel
- 17: Spreizmittel
- 18: Dämmstoffdübel

## Patentansprüche

1. Vorrichtung zur Herstellung einer Wand- oder Deckenverkleidung, umfassend ein platten- oder profilförmiges Bauelement (1) und ein Befestigungssystem (2), mittels dessen das platten- oder profilförmige Bauelement (1) in einem einstellbaren Abstand und/oder Winkel an einem bauseitigen Untergrund (3) befestigbar ist, wobei das Befestigungssystem (2) ein Abstandselement (4), ein auf dem Abstandselement (4) verstellbar angeordnetes Gelenkelement (5) sowie ein mit dem Gelenkelement (5) als Gelenk zusammenwirkendes Haltelement (6) mit einem tellerförmigen Abschnitt (6.1) und einem zylinderförmigen Abschnitt (6.2) umfasst, und wobei der zylinderförmige Abschnitt (6.2) des Halteelements (6) einen Gelenkbereich (5.1) des Gelenkelements (5) umgreift, so dass eine auf Zug und auf Druck beanspruchbare formschlüssige Verbindung zwischen dem Halteelement (6) und dem Gelenkelement (5) hergestellt ist, **dadurch gekennzeichnet, dass** der zylinderförmige Abschnitt (6.2) des Halteelements (6) schaftförmig ist und in eine umlaufende Nut (5.2) des Gelenkelements (5) eingreift.

2. Vorrichtung nach Anspruch 1,
**dadurch gekennzeichnet, dass** das Gelenkelement (5) eine Durchgangsöffnung (5.3) zur Aufnahme des Abstandselements (4) aufweist, wobei vorzugsweise in der Durchgangsöffnung (5.3) ein Innengewinde (5.4) ausgebildet ist, über welches das Gelenkelement (5) mit einem Außengewinde (4.1) des Abstandselements (4) verbunden ist.

3. Vorrichtung nach Anspruch 1 oder 2,
**dadurch gekennzeichnet, dass** das Halteelement (6) eine Durchgangsöffnung (6.3) zur abschnittsweisen Aufnahme des Abstandselements (4) und/oder zum Einführen eines Werkzeugs aufweist, mittels dessen der Abstand des Gelenkelements (5) und/oder des Abstandselements (4) in Bezug auf den bauseitigen Untergrund (3) verstellbar ist.

4. Vorrichtung nach einem der vorhergehenden Ansprüche,
**dadurch gekennzeichnet, dass** das Abstandselement (4) zur Befestigung im bauseitigen Untergrund (3) einen Befestigungsabschnitt (4.2) aufweist oder mit einem Befestigungselement (7) verbunden oder verbindbar ist, wobei diese Verbindung vorzugsweise über eine Schraubhülse (8) hergestellt oder herstellbar ist.

5. Vorrichtung nach einem der vorhergehenden Ansprüche,
**dadurch gekennzeichnet, dass** der tellerförmige Abschnitt (6.1) des Halteelements (6) auf der dem schaftförmigen Abschnitt (6.2) abgewandten Seite Verbindungsmittel (9) zur Herstellung einer kraft-, form- und/oder stoffschlüssigen Verbindung mit dem platten- oder profilförmigen Bauelement (1) aufweist, wobei vorzugsweise die Verbindungsmittel (9) zur Herstellung einer Klettverbindung stift-, pilzkopf-, haken- und/oder schlingenförmig ausgebildet sind.

6. Vorrichtung nach einem der vorhergehenden Ansprüche,
**dadurch gekennzeichnet, dass** das platten- oder profilförmige Bauelement (1) auf einer Rückseite Verbindungsmittel (10) zur Herstellung einer kraft-, form- und/oder stoffschlüssigen Verbindung mit dem tellerförmigen Abschnitt (6.1) des Halteelements (6) aufweist, wobei vorzugsweise die Verbindungsmittel (10) zur Herstellung einer Klettverbindung stift-, pilzkopf-, haken- und/oder schlingenförmig ausgebildet sind.

7. Vorrichtung nach einem der vorhergehenden Ansprüche,
**dadurch gekennzeichnet, dass** das Abstandselement (4) mit einem weiteren Befestigungselement (11), insbesondere in Form einer Strebe, eines Druckstabs und/oder eines Spannseils, verbunden ist, so dass die mittels des Befestigungssystems (2) abzutragenden Lasten an mindestens zwei Stellen in den bauseitigen Untergrund (3) eingeleitet werden.

8. Vorrichtung nach Anspruch 7,
**dadurch gekennzeichnet, dass** das weitere Befestigungselement (11) ein Spannseil ist, das einenends, vorzugsweise über eine Schlaufe oder Öse (12), verstellbar auf dem Abstandselement (4) angeordnet und andernends unter Verwendung eines Befestigungsmittels (13), beispielsweise in Form einer Schraube, am bauseitigen Untergrund (3) befestigbar ist.

9. Vorrichtung nach Anspruch 7 oder 8,
**dadurch gekennzeichnet, dass** auf dem Abstandselement (4) eine Schraubhülse oder Mutter (14) zum Spannen des Spannseils angeordnet ist.

10. Vorrichtung nach einem der vorhergehenden Ansprüche,
**dadurch gekennzeichnet, dass** das Bauelement (1) plattenförmig ist und eine Bauplatte zur Wand- oder Deckenverkleidung, beispielsweise eine Holzwerkstoffplatte, eine Gipskartonplatte und/oder eine Putzträgerplatte, und/oder ein plattenförmiges Fassadenelement ist, das zumindest teilweise aus Glas, Naturstein, Werkstein, Holz, Metall und/oder Kunststoff gefertigt ist.

11. Vorrichtung nach einem der vorhergehenden Ansprüche,
**dadurch gekennzeichnet, dass** das Bauelement (1) profilförmig ist und ein Metallprofil einer Unterkonstruktion zur Ausbildung einer vorgehängten hinterlüfteten Fassade oder eine Holzlatte ist.

12. Vorrichtung nach einem der vorhergehenden Ansprüche,
**dadurch gekennzeichnet, dass** der tellerförmige Abschnitt (6.1) des Halteelements (6) auf der dem schaftförmigen Abschnitt (6.2) zugewandten Seite eine Auflagefläche (6.4) zur Auflage auf einer Wärmedämmplatte (15) aufweist, wobei vorzugsweise die Auflagefläche (6.4) mindestens eine dorn- oder rippenähnliche Erhebung (6.5) zur Verbindung mit der Wärmedämmplatte (15) besitzt.

13. Verfahren zur Herstellung einer Wand- oder Deckenverkleidung, bei dem ein platten- oder profilförmiges Bauelement (1) in einem einstellbaren Abstand und/oder Winkel an einem bauseitigen Untergrund (3) befestigt wird und zur Befestigung des platten- oder profilförmigen Bauelements (1) ein Befestigungssystem (2) verwendet wird, das ein Abstandselement (4), ein auf dem Abstandselement (4) verstellbar angeordnetes Gelenkelement (5) sowie ein mit dem Gelenkelement (5) als Gelenk zusammenwirkendes Haltelement (6) mit einem tellerförmigen Abschnitt (6.1) und einem zylinderförmigen Abschnitt (6.2) umfasst, wobei der zylinderförmige Abschnitt (6.2) einen Gelenkbereich (5.1) des Gelenkelements (5) umgreift, dass eine auf Zug und auf Druck beanspruchbare formschlüssige Verbindung zwischen dem Halteelement (6) und dem Gelenkelement (5) hergestellt ist, und wobei durch Verstellen des Gelenkelements (5) gegenüber dem Abstandselement (4) der Abstand des platten- oder profilförmigen Bauelements (1) in Bezug auf den bauseitigen Untergrund (3) und/oder durch Kippen des Haltelements (6) gegenüber dem Gelenkelement (5) der Winkel des platten- oder profilförmigen Bauelements (1) in Bezug auf den bauseitigen Untergrund (3) eingestellt wird bzw. werden, **dadurch gekennzeichnet, dass** der zylinderförmige Abschnitt (6.2) des Halteelements (6) schaftförmig ist und in eine umlaufende Nut (5.2) des Gelenkelements (5) eingreift.

14. Verfahren nach Anspruch 13,
**dadurch gekennzeichnet, dass** das Abstandselement (4) über einen Befestigungsabschnitt (4.2) oder ein Befestigungselement (7), das vorzugsweise mittels einer Schraubhülse (8) mit dem Abstandselement (4) verbunden wird, im bauseitigen Untergrund (3) befestigt wird.

15. Verfahren nach Anspruch 13 oder 14,
**dadurch gekennzeichnet, dass** das Gelenkelement (5) über ein Innengewinde (5.4), das in einer Durchgangsöffnung (5.3) des Gelenkelements (5) ausgebildet ist, auf ein Außengewinde (4.1) des Abstandselements (4) aufgeschraubt wird.

16. Verfahren nach einem der Ansprüche 13 bis 15,
**dadurch gekennzeichnet, dass** das Halteelement (6) eine Durchgangsöffnung (5.3) aufweist, durch welche zur Abstandsverstellung ein Werkzeug eingeführt, in drehfestem Eingriff mit dem in der Durchgangsöffnung (5.3) abschnittsweise aufgenommenen Gelenkelement (5) und/oder Abstandselement (4) gebracht und gedreht wird.

17. Verfahren nach einem der Ansprüche 13 bis 16,
**dadurch gekennzeichnet, dass** das Abstandselement (4) mit einem weiteren Befestigungselement (11), insbesondere in Form einer Strebe, eines Druckstabs und/oder eines Spannseils, verbunden wird, so dass die mittels des Befestigungssystems (2) abzutragenden Lasten an mindestens zwei Stellen in den bauseitigen Untergrund (3) eingeleitet werden.

18. Verfahren nach Anspruch 17,
**dadurch gekennzeichnet, dass** als weiteres Befestigungselement (11) ein Spannseil verwendet wird, das einenends, vorzugsweise über eine Schlaufe oder Öse (12), mit dem Abstandselement (4) verbunden wird, andernends unter Verwendung eines Befestigungsmittels (13), beispielsweise in Form einer Schraube, am bauseitigen Untergrund (3) befestigt wird.

19. Verfahren nach Anspruch 18,
**dadurch gekennzeichnet, dass** zum Spannen des Spannseils eine auf dem Abstandselement (4) angeordnete Schraubhülse oder Mutter (14) verstellt wird.

20. Verfahren nach einem der Ansprüche 13 bis 19,
**dadurch gekennzeichnet, dass** das platten- oder profilförmigen Bauelement (1) kraft-, form- und/oder stoffschlüssig mit dem Halteelement (6) verbunden wird, wobei vorzugsweise die Verbindung unter Zuhilfenahme von Verbindungsmitteln (9, 10) hergestellt wird, die auf dem tellerförmigen Abschnitt (6.1) des Halteelements (6) und/oder auf dem platten- oder profilförmige Bauelement (1) angeordnet sind, und wobei weiterhin vorzugsweise die Verbindungsmittel (9, 10) stift-, pilzkopf-, haken- und/oder schlingenförmig zur Herstellung einer Klettverbindung ausgebildet sind.

21. Verfahren nach einem der Ansprüche 13 bis 20,
**dadurch gekennzeichnet, dass** das Befestigungssystem (2) zur Befestigung des platten- oder profilförmigen Bauelements (1) am bauseitigen Untergrund (3) zugleich zur Befestigung einer Wärmedämmplatte (15) eingesetzt wird, wobei vorzugsweise die Wärmedämmplatte (15) zwischen dem tellerförmigen Abschnitt (6.1) des Halteelements (6) und dem Untergrund (3) eingeklemmt wird.

## Claims

1. A device for the production of a wall or ceiling cladding, comprising a panel-shaped or profiled construction element (1) and a securing system (2), by means of which the panel-shaped or profiled construction element (1) can be secured at a distance from and/or angle to a construction-side substructure (3) which can be set, wherein the securing system (2) comprises a spacer element (4), a joint element (5) which can be adjustably disposed on the spacer element (4), as well as a retaining element (6) which cooperates with the joint element (5) as a joint and has a disk-shaped section (6.1) and a cylindrical section (6.2), and wherein the cylindrical section (6.2) of the retaining element (6) encompasses a joint region (5.1) of the joint element (5), so that an interlocking connection that can be placed under tension and under compression is produced between the retaining element (6) and the joint element (5),
**characterized in that** the cylindrical section (6.2) of the retaining element (6) is in the shape of a shaft and engages in a circumferential groove (5.2) of the joint element (5).

2. The device as claimed in claim 1,
**characterized in that** the joint element (5) has a through opening (5.3) for receiving the spacer element (4), wherein preferably, an internal thread (5.4) is formed in the through opening (5.3), via which the joint element (5) is connected to an external thread (4.1) of the spacer element (4).

3. The device as claimed in claim 1 or claim 2,
**characterized in that** the retaining element (6) has a through opening (6.3) in order to receive sections of the spacer element (4) and/or for insertion of a tool by means of which the distance between the joint element (5) and/or the spacer element (4) and the construction-side substructure (3) can be adjusted.

4. The device as claimed in one of the preceding claims,
**characterized in that** the spacer element (4) has a securing section (4.2) for securing in the construction-side substructure (3) or is connected to or can be connected to a securing element (7), wherein this connection is preferably produced or can be produced via a threaded sleeve (8).

5. The device as claimed in one of the preceding claims,
**characterized in that** on the side facing away from the shaft-shaped section (6.2), the disk-shaped section (6.1) of the retaining element (6) has connecting means (9) for the production of a frictional, interlocking and/or cohesive connection to the panel-shaped or profiled construction element (1), wherein preferably, the connecting means (9) are rod-shaped, mushroom-shaped, hook-shaped and/or loop-shaped in configuration in order to produce a touch-and-close connection.

6. The device as claimed in one of the preceding claims,
**characterized in that** on a rear side, the panel-shaped or profiled construction element (1) has connecting means (10) for the production of a frictional, interlocking and/or cohesive connection with the disk-shaped section (6.1) of the retaining element (6), wherein preferably, the connecting means (10) are rod-shaped, mushroom-shaped, hook-shaped and/or loop-shaped in configuration in order to produce a touch-and-close connection.

7. The device as claimed in one of the preceding claims,
**characterized in that** the spacer element (4) is connected to a further securing element (11), in particular in the form of a strap, a pressure bar and/or a tension cable, so that the loads to be dissipated by means of the securing system (2) can be introduced into the construction-side substructure (3) in at least two locations.

8. The device as claimed in claim 7,
**characterized in that** the further securing element (11) is a tension cable wherein one end is adjustably disposed on the spacer element (4), preferably by means of a loop or eyelet (12), and wherein the other end can be secured to the construction-side substructure (3) by using a securing means (13), for example in the form of a screw.

9. The device as claimed in claim 7 or claim 8,
**characterized in that** a threaded sleeve or nut (14) for tightening the tension cable is disposed on the spacer element (4).

10. The device as claimed in one of the preceding claims,
**characterized in that** the construction element (1) is panel-shaped and is a construction panel for wall or ceiling cladding, for example wood material board, plasterboard and/or plaster baseboard, and/or a panel-shaped façade element which is produced at least in part from glass, natural stone, engineered stone, wood, metal and/or plastic.

11. The device as claimed in one of the preceding claims,
**characterized in that** the construction element (1) is profiled and is a metallic profile of a substructure for the formation of a rainscreen, or a wooden batten.

12. The device as claimed in one of the preceding claims,
**characterized in that** on the side facing the shaft-shaped section (6.2), the disk-shaped section (6.1) of the retaining element (6) has a support surface (6.4) for bearing on a thermal insulation panel (15), wherein preferably, the support surface (6.4) has at least one spike-like or rib-like prominence (6.5) for connecting to the thermal insulation panel (15).

13. A method for the production of a wall or ceiling cladding, in which a panel-shaped or profiled construction element (1) is secured at a distance from and/or angle to a construction-side substructure (3) which can be set and in order to secure the panel-shaped or profiled construction element (1), a securing system (2) is used which comprises a spacer element (4), a joint element (5) which is adjustably disposed on the spacer element (4), as well as a retaining element (6) which cooperates with the joint element (5) as a joint, having a disk-shaped section (6.1) and a cylindrical section (6.2), wherein the cylindrical section (6.2) encompasses a joint region (5.1) of the joint element (5), in that an interlocking connection which can be placed under tension and compression is produced between the retaining element (6) and the joint element (5), and wherein by adjusting the joint element (5) with respect to the spacer element (4), the distance between the panel-shaped or profiled construction element (1) and the construction-side substructure (3) can be adjusted, and/or by inclining the retaining element (6) with respect to the joint element (5), the angle of the panel-shaped or profiled construction element (1) with respect to the construction-side substructure (3) can be adjusted, **characterized in that** the cylindrical section (6.2) of the retaining element (6) is in the shape of a shaft and engages in a circumferential groove (5.2) of the joint element (5).

14. The method as claimed in claim 13,
**characterized in that** the spacer element (4) is secured in the construction-side substructure (3) via a securing section (4.2) or a securing element (7) which is preferably connected to the spacer element (4) by means of a threaded sleeve (8).

15. The method as claimed in claim 13 or claim 14,
**characterized in that** the joint element (5) is screwed onto an external thread (4.1) of the spacer element (4) via an internal thread (5.4) which is formed in a through opening (5.3) of the joint element (5).

16. The method as claimed in one of claims 13 to 15,
**characterized in that** the retaining element (6) has a through opening (5.3) through which, for the purposes of adjusting the distance, a tool is introduced, brought into non-rotatable engagement with the joint element (5) and/or the spacer element (4) sections of which are received in the through opening (5.3), and then turned.

17. The method as claimed in one of claims 13 to 16,
**characterized in that** the spacer element (4) is connected to a further securing element (11), in particular in the form of a strap, a pressure bar and/or a tension cable, so that the loads which are to be dissipated by means of the securing system (2) are introduced into the construction-side substructure (3) in at least two locations.

18. The method as claimed in claim 17,
**characterized in that** a tension cable is used as the further securing element (11), one end of which is connected to the spacer element (4), preferably by means of a loop or eyelet (12), and the other end of which is secured to the construction-side substructure (3) by using a securing means (13), for example in the form of a screw.

19. The method as claimed in claim 18,
**characterized in that** in order to tighten the tension cable, a threaded sleeve or nut (14) disposed on the spacer element (4) is adjusted.

20. The method as claimed in one of claims 13 to 19,
**characterized in that** the panel-shaped or profiled construction element (1) is connected by friction, by interlocking and/or by cohesion to the retaining element (6), wherein preferably, the connection is produced with the help of connecting means (9, 10) which are disposed on the disk-shaped section (6.1) of the retaining element (6) and/or on the panel-shaped or profiled construction element (1), and wherein more preferably, the connecting means (9, 10) are rod-shaped, mushroom-shaped, hook-shaped and/or loop-shaped in order to produce a touch-and-close connection.

21. The method as claimed in one of claims 13 to 20,
**characterized in that** the securing system (2) for securing the panel-shaped or profiled construction element (1) to the construction-side substructure (3) is also used for securing a thermal insulation panel (15), wherein preferably, the thermal insulation panel (15) is clamped between the disk-shaped section (6.1) of the retaining element (6) and the substructure (3) .

## Revendications

1. Dispositif, destiné à créer un revêtement de mur ou de plafond, comprenant un élément de construction (1) en forme de panneau ou de profilé et un système de fixation (2), à l'aide duquel l'élément de construction (1) en forme de panneau ou de profilé peut se fixer avec un écart et/ou sous un angle réglable sur un support (3) côté bâtiment, le système de fixation (2) comprenant un distanceur (4), un élément articulé (5) placé de manière réglable sur le distanceur (4) et un élément de maintien (6) coopérant avec l'élément articulé (5) sous la forme d'une articulation, doté d'un segment en forme de disque (6.1) et d'un segment cylindrique (6.2), et le segment cylindrique (6.2) de l'élément de maintien (6) entourant une zone articulée (5.1) de l'élément articulé (5), de sorte à établir une liaison par complémentarité de forme, susceptible d'être contrainte en traction et en pression entre l'élément de maintien (6) et l'élément articulé (5), **caractérisé en ce que** le segment cylindrique (6.2) de l'élément de maintien (6) présente la forme d'une tige et s'engage dans une rainure périphérique (5.2) de l'élément articulé (5).

2. Dispositif selon la revendication 1,
**caractérisé en ce que** l'élément articulé (5) comporte un orifice de passage (5.3) destiné à recevoir le distanceur (4), de préférence dans l'orifice de passage (5.3) étant conçu un taraudage (5.4) par l'intermédiaire duquel l'élément articulé (5) est relié avec un filetage (4.1) du distanceur (4).

3. Dispositif selon la revendication 1 ou 2,
**caractérisé en ce que** l'élément de maintien (6) comporte un orifice de passage (6.3) destiné à recevoir par endroits le distanceur (4) et/ou à introduire un outil, à l'aide duquel l'écart de l'élément articulé (5) et/ou du distanceur (4) par rapport au support (3) côté bâtiment est réglable.

4. Dispositif selon l'une quelconque des revendications précédentes,
**caractérisé en ce que** pour sa fixation sur le support (3) côté bâtiment, le distanceur (4) comporte un segment de fixation (4.2) ou est relié ou susceptible d'être relié avec un élément de fixation (7), la liaison étant réalisée ou réalisable de préférence par l'intermédiaire d'une douille filetée (8).

5. Dispositif selon l'une quelconque des revendications précédentes,
**caractérisé en ce que** sur le côté opposé au segment (6.2) en forme de tige, le segment en forme de disque (6.1) de l'élément de maintien (6) comporte des moyens de liaison (9), destinés à établir une liaison par complémentarité de force, de forme et/ou par association de matières avec l'élément de construction (1) en forme de panneau ou de profilé, de préférence pour établir une liaison autoagrippante, les moyens de liaison (9) étant conçus en forme de goujons, de têtes de champignons, de crochets et/ou de boucles.

6. Dispositif selon l'une quelconque des revendications précédentes,
**caractérisé en ce que** sur une face arrière, l'élément de construction (1) en forme de panneau ou de profilé comporte des moyens de liaison (10) destinés à établir une liaison par complémentarité de force, de forme et/ou par association de matières avec le segment en forme de disque (6.1) de l'élément de maintien (6), de préférence pour établir une liaison autoagrippante, les moyens de liaison (10) étant conçus en forme de goujons, de têtes de champignons, de crochets et/ou de boucles.

7. Dispositif selon l'une quelconque des revendications précédentes,
**caractérisé en ce que** le distanceur (4) est relié avec un autre élément de fixation (11), notamment sous la forme d'une entretoise, d'une barre de pression et/ou d'un câble tendeur, de sorte que les charges qui doivent être évacuées à l'aide du système de fixation (2) soient introduites en au moins deux endroits dans le support (3) côté bâtiment.

8. Dispositif selon la revendication 7,
**caractérisé en ce que** l'autre élément de fixation (11) est un câble tendeur, qui par une extrémité est placé sur le distanceur (4) de manière réglable, de préférence par l'intermédiaire d'une boucle ou d'un œillet (12) et par l'autre extrémité est susceptible d'être fixé sur le support (3) côté bâtiment, en utilisant un moyen de fixation (13), par exemple sous la forme d'une vis.

9. Dispositif selon la revendication 7 ou 8,
**caractérisé en ce que** sur le distanceur (4) est placé(e) une douille filetée ou un écrou (14) pour serrer le câble tendeur.

10. Dispositif selon l'une quelconque des revendications précédentes,
**caractérisé en ce que** l'élément de construction (1) est en forme de panneau et est un panneau de construction pour le revêtement de murs ou de plafonds, par exemple un panneau en dérivé du bois, un panneau de placoplâtre et/ou un panneau support d'enduit et/ou un élément de façade en forme de panneau qui est fabriqué au moins partiellement en verre, en pierre naturelle, en pierre de taille, en bois, en métal et/ou en matière plastique.

11. Dispositif selon l'une quelconque des revendications précédentes,
**caractérisé en ce que** l'élément de construction (1) est en forme de profilé et est un profilé métallique d'une substructure, pour la création d'un façade rétro-aérée ou est une latte en bois.

12. Dispositif selon l'une quelconque des revendications précédentes,
**caractérisé en ce que** sur le côté qui fait face au segment (6.2) en forme de tige, le segment en forme de disque (6.1) de l'élément de maintien (6) comporte une surface d'appui (6.4) destinée à être mise en appui sur un panneau isolant thermique (15), de préférence la surface d'appui (6.4) disposant d'au moins une protubérance (6.5) en forme d'épine ou de nervure, pour la liaison avec le panneau isolant thermique (15).

13. Procédé, destiné à fabriquer un revêtement de mur ou de plafond, lors duquel l'on fixe un élément de construction (1) en forme de panneau ou de profilé avec un écart et/ou sous un angle réglable sur un support (3) côté bâtiment et pour la fixation de l'élément de construction (1) en forme de panneau ou de profilé, l'on utilise un système de fixation (2) qui comprend un distanceur (4), un élément articulé (5) placé de manière réglable sur le distanceur (4) et un élément de maintien (6) coopérant avec l'élément articulé (5) en tant qu'articulation, doté d'un segment en forme de disque (6.1) et d'un segment cylindrique (6.2), le segment cylindrique (6.2) entourant une zone articulée (5.1) de l'élément articulé (5) de sorte qu'il s'établisse une liaison par complémentarité de forme susceptible d'être contrainte en traction et en pression entre l'élément de maintien (6) et l'élément articulé (5), et lors duquel, par réglage de l'élément articulé (5) par rapport au distanceur (4) l'on règle l'écart de l'élément de construction (1) en forme de panneau ou de profilé par rapport au support (3) côté bâtiment et/ou par basculement de l'élément de maintien (6) par rapport à l'élément articulé (5), l'on règle l'angle de l'élément de construction (1) en forme de panneau ou de profilé par rapport au support (3) côté bâtiment, **caractérisé en ce que** le segment cylindrique (6.2) de l'élément de maintien (6) est en forme de tige et s'engage dans une rainure périphérique (5.2) de l'élément articulé (5) .

14. Procédé selon la revendication 13,
**caractérisé en ce que** l'on fixe le distanceur (4) dans le support (3) côté bâtiment par l'intermédiaire d'un segment de fixation (4.2) ou d'un élément de fixation (7), qui est relié de préférence à l'aide d'une douille filetée (8) avec le distanceur (4).

15. Procédé selon la revendication 13 ou 14,
**caractérisé en ce que** l'on visse l'élément articulé (5) par l'intermédiaire d'un taraudage (5.4) qui est conçu dans un orifice de passage (5.3) de l'élément articulé (5) sur un filetage (4.1) du distanceur (4).

16. Procédé selon l'une quelconque des revendications 13 à 15,
**caractérisé en ce que** l'élément de maintien (6) comporte un orifice de passage (5.3) à travers lequel, pour le réglage de l'écart l'on introduit un outil, on l'amène en engagement solidaire en rotation avec l'élément articulé (5) reçu par endroits dans l'orifice de passage (5.3) et/ou le distanceur (4) et on le fait tourner.

17. Procédé selon l'une quelconque des revendications 13 à 16,
**caractérisé en ce que** l'on relie le distanceur (4) avec un autre élément de fixation (11), notamment sous la forme d'une entretoise, d'une barre de pression et/ou d'un câble tendeur, de sorte que les charges qui doivent être évacuées à l'aide du système de fixation (2) soient introduites en au moins deux endroits dans le support (3) côté bâtiment.

18. Procédé selon la revendication 17,
**caractérisé en ce que** l'on utilise en tant qu'autre élément de fixation (11) un câble tendeur que l'on relie par une extrémité avec le distanceur (4), de préférence par l'intermédiaire d'une boucle ou d'un œillet (12) et que l'on fixe par l'autre extrémité sur le support (3) côté bâtiment, en utilisant un moyen de fixation (13), par exemple sous la forme d'une vis.

19. Procédé selon la revendication 18,
**caractérisé en ce que** pour serrer le câble tendeur, l'on règle une douille filetée ou un écrou (14) placé(e) sur le distanceur (4).

20. Procédé selon l'une quelconque des revendications 13 à 19,
**caractérisé en ce que** l'on relie l'élément de construction (1) en forme de panneau ou de profilé par complémentarité de force, de forme et/ou par association de matières avec l'élément de maintien (6), la liaison étant établie de préférence en s'aidant de moyens de liaison (9, 10) qui sont placés sur le segment en forme de disque (6.1) de l'élément de maintien (6) et/ou sur l'élément de construction (1) en forme de panneau ou de profilé, et par ailleurs, les moyens de liaison (9, 10) étant conçus de préférence en forme de goujons, de têtes de champignons, de crochets et/ou de boucles pour établir une liaison autoagrippante.

21. Procédé selon l'une quelconque des revendications 13 à 20,
**caractérisé en ce que** l'on utilise le système de fixation (2) destiné à fixer l'élément de construction (1) en forme de panneau ou de profilé sur le support (3) côté bâtiment simultanément pour la fixation d'un panneau isolant thermique (15), en enserrant de préférence le panneau isolant thermique (15) entre le segment en forme de disque (6.1) de l'élément de maintien (6) et le support (3).
